# FASCICULE DE BREVET EUROPEEN

(11) **EP 2 561 047 B1**
(45) Date de publication et mention de la délivrance du brevet: **15.01.2014**
(21) Numéro de dépôt: 11722841.1
(22) Date de dépôt: 22.04.2011
(51) Int. Cl.: C10L 5/44

(54) **PROCÉDÉ DE FABRICATION DE PELLETS**
VERFAHREN ZUR HERSTELLUNG VON PELLETS
PROCESS FOR MANUFACTURING PELLETS

(30) Priorité: 23.04.2010 FR 1001739
(43) Date de publication de la demande: 27.02.2013
(73) Titulaire: Zeta, 06600 Antibes (FR)
(72) Inventeur: FRANK, Etienne, F-06250 Mougins (FR)
(74) Mandataire: Dadoun, Aimée
(86) Numéro de dépôt international: PCT/FR2011/000247
(87) Numéro de publication internationale: WO 2011/131869

(56) Documents cités:
- EP-A2- 0 049 677
- WO-A1-2008/106993
- WO-A1-2009/139621
- DE-A1- 10 205 105
- US-A- 4 324 561

## Description

L'invention concerne un procédé de fabrication de pellets appelés aussi granulés. L'invention concerne également les pellets obtenus par le procédé de fabrication mis en oeuvre.

A travers les âges, l'homme a toujours su tirer profit de l'énergie que la nature mettait à sa disposition. Durant des siècles, les végétaux secs et le bois furent les principales ressources énergétiques que l'homme a utilisées. Cette énergie était accessible, calorifique et renouvelable à l'infini.

Aujourd'hui, en adoptant le protocole de Kyoto, les pays industrialisés se sont engagés à diminuer les émissions globales à effet de serres de 20% d'ici 2020 par rapport aux niveaux de 1990. Ainsi, les enjeux du développement durable lancent aux industriels, collectivités et au citoyens un triple défi énergétique, environnemental et économique.

Le chauffage aux pellets présente de nombreux avantages qui en font un mode de chauffage le plus performant, le plus économique et le plus écologique. La forte densité de ce combustible, alliée à son faible taux d'humidité, lui confère une très haute performance énergétique. Le rendement des appareils de chauffage aux pellets est effectivement exceptionnel puisqu'il est compris entre 85 et 90% pour les chaudières et entre 80 et 90 % pour les poêles. Ainsi, seul 10% du pellet est perdu sous forme de fumées et de cendres. Le pellet coûte 25% moins cher que le gaz naturel et deux fois moins cher que le fioul. De plus, ce biocombustible, grâce à son indépendance énergétique, conserve un prix stable en permanence, à l'inverse des énergies fossiles.

Les pellets font partie des biocombustibles les plus écologiques. Ils proviennent en effet de résidus de végétaux et/ou de bois et par conséquent n'entraîne pas de coupe d'arbres. Les pellets étant fabriqués sans colle ni additifs, ils sont considérés comme combustibles propre et non polluant. Le bilan carbone des pellets est équivalent à zéro car le gaz carbonique qu'ils rejettent lors de leur combustion est absorbé lors de la croissance des arbres. De la même manière, leur impact environnemental est très faible puisque ces produits sont fabriqués et consommés au niveau local, contrairement aux énergies (pétrole, gaz) nécessitant d'importants transports. Enfin, les pellets permettent de lutter contre l'effet de serre et aident à atteindre les objectifs européens fixés par le *Grenelle de l'environnement,* à savoir l'utilisation de 23% d'énergies renouvelables d'ici 2020.

Le chauffage aux pellets est donc le meilleur combustible pour obtenir une chaleur efficace, économique et respectueuse de l'environnement.

Dans ce contexte de respect de l'environnement, il apparaît donc nécessaire de mettre en oeuvre des procédés de fabrication de pellets qui soit en adéquation avec les exigences fixées, Les procédés de fabrication de pellets se doivent donc d'être à la fois économique en terme d'énergie, pour produire des pellets à fort pouvoir calorifique, et ce tout en respectant l'environnement.

Il existe un certain nombre de procédés connus pour fabriquer les pellets. Il est actuellement habituel de fabriquer les pellets en plusieurs étapes; toutes les étapes incluent une étape très vorace en énergie pour le séchage de la biomasse.

La demande de brevet WO 2006/081645 divulgue un procédé pour préparer des pellets à partir de résidus de biomasse. Les étapes, décrites dans ce procédé comprennent le chargement des résidus de biomasse dans un container, le séchage desdits résidus dans un système séchant à l'air chaud, le raffinage des résidus de biomasse séchés et la séparation des résidus en deux fractions afin de presser et extruder des résidus adaptés dans une granuleuse ou pastilleuse pour former les pellets. Les pellets obtenus par le procédé décrit présentent une compaction comprise entre 550 et 750 Kg/m³.

La demande de brevet EP 2 157 158 divulgue un procédé de fabrication de pellets à partir de grandes pièces de matériaux fibreux. Le matériau brut est tout d'abord haché, puis séché et ensuite transformé en pellets dans une pastilleuse.

La demande de brevet US 4,324,561 divulgue un procédé de fabrication de pellets qui consiste à traiter la biomasse par une première étape de séchage pour obtenir une matière présentant un taux d'humidité de 12%, une seconde étape de broyage, une troisième étape de séchage supplémentaire à une température de 90 à 121 °C pour permettre une meilleure plastification des résines et enfin une quatrième étape de fondation des pellets dans une pastilleuse. Ici le séchage de la biomasse est effectué en amont de la pastilleuse, deux fois sur la matière première, avant le passage dans la pastilleuse.

Le document US 4,324,561 divulgue un procédé de fabrication de pellets qui consiste en une première étape de séchage de la biomasse, une seconde étape de broyage, une troisième étape de séchage supplémentaire à une température de 90 à 121 °C et récupération de la chaleur émise par la pastilleuse afin de sécher en amont (de la pastilleuse) la matière broyée. La biomasse humide n'est pas ici séchée dans la pastilleuse.

Le document EP0049677 divulgue une installation de transformation de déchets ligneux en bois en granulés combustibles de faible diamètre. Les sciures obtenues des déchets de bois sont ici séchées avant d'être dirigées vers la presse à granuler.

Ainsi, les procédés actuellement connus présentent un inconvénient majeur, à savoir qu'ils utilisent beaucoup d'énergie pour sécher par chauffage la biomasse avant la transformation sous forme de pellets. Le rendement de fabrication par transformation de la biomasse en pellets n'est pas optimisé.

En conséquence, il n'existe à l'heure actuelle aucune solution satisfaisante qui permette de fabriquer des pellets à fort pouvoir calorifique de façon, à la fois, à être économe en terme d'énergie utilisée et à respecter l'environnement.

La présente invention se propose de fournir une solution constituant un progrès considérable par rapport aux techniques qui sont mises en oeuvre à l'heure actuelle.

Un objectif de l'invention est ainsi d'indiquer un procédé de fabrication de pellets qui permette une rentabilité énergétique des installations utilisées et un respect de l'environnement, tout en produisant des pellets préséntant une très haute compaction et un très fort pouvoir calorifique.

Le terme « pellets » dans la présente invention signifie granulés d'origine végétale ou pellets végétaux, comportant des ligneux et des herbacés, ou granulés de bois. Le procédé de fabrication de pellets selon l'invention est décrit plus particulièrement pour la fabrication de pellets végétaux, mais il s'applique également à la fabrication des granulés de bois.

Un premier objet selon l'invention consiste en un procédé de fabrication de pellets à partir de résidus de biomasse humide ayant un taux d'humidité élevé compris entre 25 et 80% comprenant les étapes de :
a) charger le broyat des résidus de biomasse humides dans un réceptacle,
b) sécher les résidus de biomasse humides dans un déshydrater et
c) transformer les résidus de biomasse secs dans une pastilleuse comportant une matrice en acier percée de trous et un rotor en acier comprenant des roues crantées en acier, pour obtenir les pellets dont le taux d'humidité est compris entre 5 et 15%,
ledit procédé étant caractérisé en ce que l'étape de séchage des résidus de biomasse humide s'effectue simultanément à l'étape de transformation des résidus en pellets à une température comprise entre 65 et 95°C obtenue par rotation des roues crantées en acier sur la matrice en acier dans une pastilleuse couplée en circuit fermé a un déshydrateur à échange air/air situé en aval de la pastilleuse et comprenant un by-pass de communication pastilleuse-déshydrateur.

Le procédé selon l'invention utilise une biomasse humide, de récolte récente, sans passer par une phase de séchage préalable particulièrement croûteuse.

Les résidus de biomasse humide proviennent de l'entretien des espaces verts urbains et périurbains dont les surfaces et les volumes sont en constante progression. Ils comprennent notamment les produits issus des élagages urbains et nettoyages des bords de route, les déchets verts de tailles et de tontes, les feuilles, le rebut de bois coupé, les troncs et branches d'arbres drivers, les broyats de végétaux divers et les résidus de taille d'arbustes et de haies issus de jardins publics et privés. Les résidus de biomasse humide comprennent également la litière de cheval et les broyats végétaux en fermentation destinés au compost.

Les prélèvements de cette biomasse humide sont effectués par les collectivités et les sociétés privées à longueur d'année, avec des périodes plus favorables au printemps et en automne. La disponibilité géographique de cette biomasse est très concentrée et ne nécessite aucun transport lourd.

Une fois prélevée, cette biomasse humide est simplement mise à l'abri un certain temps si besoin pour lui permettre de sécher naturellement et ce pour obtenir un taux d'humidité compris entre 25 et 80%. Après un temps de séchage variable qui est fonction du taux d'humidité de la biomasse humide récoltée, ladite biomasse humide est broyée. Le broyat des résidus de biomasse humide est chargé dans un réceptacle, et acheminé dans un cylindre de réception de la pastilleuse par une vis sans fin.

L'étape de séchage des résidus de biomasse humide s'effectue simultanément à l'étape de transformation des résidus en pellets à une température comprise entre 65 et 95°C obtenue par rotation des roues crantées en acier sur la matrice en acier dans une pastilleuse couplée à un déshydrateur à échange air/air situé en aval de la pastilleuse et comprenant un by-pass de communication pastilleuse-déshydrateur.

Par « couplée » on entend que la pastilleuse est en relation directe avec le déshydrateur et est située proche de celui-ci où à côté, de manière à ce que les pellets sortant et entrant dans la pastilleuse parcourent peu de distance. Le déshydrateur est situé en aval de la pastilleuse dans l'étape simultanée de transformation en pellets et séchage des résidus de biomasse humide.

La température de 65 à 95 °C obtenue par rotation des roues crantées en acier sur la matrice en acier permet de sécher les résidus de biomasse humide lors de leur passage à travers les trous de la matrice. Le broyat, une fois poussé vers la matrice par les roues du rotor, est évacué sous forme de spaghetti hors de la matrice dans un conduit le déversant dans un déshydrateur à échange air/air comprenant un by-pass de communication pastilleuse-déshydrateur. Le broyat à la sortie de la matrice et à l'entrée du déshydrateur est porté à la température de 65 à 95°C, de préférence de 70 à 90°C.

La pastilleuse utilisée dans le procédé selon l'invention est par exemple une pastilleuse de type Kahl® améliorée et perfectionnée pour le besoin du procédé.

Ainsi, l'apport de broyat de biomasse humide sur la pastilleuse chaude permet de réduire la température de fonctionnement de l'ensemble mécanique en mouvement (rotor et matrice) et de déshydrater la biomasse humide.

Le déshydrateur à échange air/air est situé proche, voire très proche de chaque pastilleuse. Ainsi, la température du broyat dans la pastilleuse couplée en circuit fermé au déshydrateur permet au broyat de sécher rapidement et d'être transformé en pellets. Le parcours en circuit fermé dans le déshydrateur permet aux pellets encore légèrement humides d'être transportés vers la tête de cylindre de la pastilleuse tout en perdant de l'humidité résiduelle par échange air/air. La vapeur d'eau est évacuée par l'ouverture au sommet du déshydrateur. Une fois secs, les pellets sont évacués par vidange grâce au by-pass actionné vers l'extérieur. Cette action est réglée de façon électropneumatique.

La combinaison de la température dans la pastilleuse au niveau de la matrice et du parcours en circuit fermé du broyat entre le déshydrateur et la pastilleuse est l'élément clé de l'invention. En effet, le frottement acier contre acier des roues crantées du rotor sur la matrice va dégager une chaleur très importante. Cette chaleur produite constitue le premier moyen de séchage de la biomasse humide, par absorption d'eau contenue dans la biomasse. Le second moyen de séchage est le parcours en circuit fermé du broyat entre la pastilleuse et le déshydrateur qui permet d'optmiser le séchage des pellets par échange air-air. Ces deux moyens en combinaison permettent de fabriquer rapidement des pellets à fort pouvoir calorifique, en optimisant la phase de séchage des résidus de biomasse humide.

Dans un mode de réalisation préférentielle selon l'invention, l'étape de séchage simultanée à l'étape de transformation en pellets dans la pastilleuse s'effectue avec une vitesse du rotor sur la matrice comprise entre 350 et 450 tours/minutes et un espace entre les roues du rotor et la matrice inférieur ou égal à 1/10 mm.

Dans un autre mode de réalisation préférentielle selon l'invention, le déshydrateur à échange air/air est couplé à la pastilleuse de manière à refroidir de 8 à 15% la température des pellets entrant pour les réinjecter dans la pastilleuse par le by-pass de communication. On préfèrera un refroidissement de 10% pour optimiser le séchage global.

Le déshydrateur est un ensemble en métal caréné, composé de godets en acier de récupération de la biomasse extrudée à travers la matrice de la pastilleuse. Ces godets sont fixés sur une courroie synthétique entraînée par un moteur électrique, tel un convoyeur. Un orifice au sommet de l'ensemble permet l'évacuation de la vapeur d'eau. L'ouverture dans la partie basse permet à la biomasse, issue de la matrice, d'entrer dans le déshydrateur. Une autre ouverture dans la partie haute permet à la matière de revenir vers la cloche du cylindre. La force centrifuge permet au produit ainsi transporté d'être refoulé vers le cylindre.

Afin d'optimiser le séchage comme décrit précédemment, la pastilleuse et le déshydrateur comportent des orifices permettant l'évacuation de la vapeur d'eau. Une partie de la vapeur d'eau contenue dans les résidus de biomasse s'évacue par une cloche du cylindre de la pastilleuse non obturée. L'autre partie de la vapeur d'eau contenue dans les pellets sortant de la pastilleuse s'évacue par une ouverture présente au sommet du déshydrateur.

Comme décrit précédemment, la pastilleuse est couplée au déshydrateur, permettant un séchage optimal. Ce couplage est optimisé lorsqu'il y a très peu de perte d'énergie entre la sortie et l'entrée des pellets dans la pastilleuse. Ainsi, on définit une longueur H du parcours des pellets dans le déshydrateur. Le parcours des pellets sortant de la pastilleuse sur une longueur H dans le déshydrateur permet de refroidir d'environ 10% leur température. Cette distance est bien entendu fonction de la quantité et du taux d'humidité des résidus de biomasse à l'entrée de la pastilleuse, ainsi que de la puissance du moteur. L'homme de l'art saura adapter cette distance en fonction de ces critères, de la taille de la pastilleuse et du déshydrateur.

Ainsi, selon le mode de réalisation décrit dans l'exemple 1, la longueur H du parcours dans le déshydrateur des pellets sortant de la pastilleuse est,comprise entre 200 et 400 cm. De manière préférentielle encore, la longueur H est égale environ à 350 cm.

Dans un mode de réalisation préférentiel selon l'invention, la matrice de la pastilleuse est percée de trous de diamètre préférentiellement compris entre 6 et 16 mm.

Dans le procédé selon l'invention, un temps de séchage déterminé dans le déshydrateur est nécessaire pour obtenir des pellets dont le taux d'humidité est compris entre 5 et 15%, de préférence à 10%. Ce temps de séchage est réglé par un opérateur en fonction de l'humidité du végétal à l'entrée de la pastilleuse ainsi que de sa composition (ligneux et herbacés, bois, mélanges, etc). Il est automatisé par un minuteur calculant le temps de séchage et le temps de chargement en fonction des critères précisés ci-avant.

Dans un mode de réalisation préférentiel selon l'invention, l'étape de séchage dans la pastilleuse-déshydrateur a une durée de 0,5 à 2 mn et permet d'obtenir des pellets dont le taux d'humidité est compris entre 5 et 15%, de préférence entre 10 et 12%. L'étape de séchage a de préférence une durée de 1 mn.

Ainsi, le procédé de fabrication de pellets selon l'invention permet de fabriquer de 150 à 650 Kg de pellets par heure. Il apparaît des éléments décrits ci-avant que le procédé selon l'invention est économe en énergie, est rapide et permet de fabriquer des pellets à fort pouvoir calorifique.

Afin d'optimiser la vitesse de production des pellets, le procédé de fabrication de pellets selon l'invention peut comprendre une ou plusieurs pastilleuse(s) couplée(s) chacune en circuit fermé à un ou deux déshydrateurs. Ainsi, la biomasse humide et broyée est acheminée par un convoyeur vers par exemple deux pastilleuses-déshydrateurs disposés en symétrie par rapport à la cuve contenant la biomasse humide. Deux moteurs électriques sont alors nécessaires dans ce mode de réalisation et les granulés sortent alors en double flux. On comprendra qu'il est possible de multiplier le nombre de pastilleuse-déshydrateur en aval de l'acheminement de la biomasse humide selon le besoin de rendement.

Dans un mode de réalisation préférentiel selon l'invention, le rotor de la pastilleuse est fixé et maintenu par un écrou hydraulique. Cet écrou hydraulique permet d'absorber les chocs thermiques et mécaniques. La biomasse chargée dans le cylindre présente à température ambiante un taux d'humidité élevé compris entre 25 et 80%. L'ensemble mécanique de la pastilleuse en fonction peut révéler une température de près de 95° C. Afin- d'absorber les distorsions dues au choc thermique, on utilise de préférence un écrou hydraulique.

Le rotor de la pastilleuse est entraîné par un ou deux moteurs électriques de puissance maximale chacun d'environ 40 KW, via une chaine en bain d'huile. Dans le cas ou deux moteurs coexistent, le premier moteur électrique a une puissance de 20 KW et le second moteur électrique une puissance de 40 KW. Dans ce dernier cas, la puissance totale n'est utilisée qu'au moment du chargement de la matière dans le cylindre. A partir du premier cycle pastilleuse-déshydrateur, la puissance est réduite et seul le moteur le moins puissant est en fonction.

Le procédé de fabrication de pellets selon l'invention a été réalisé principalement pour traiter des résidus de biomasse humide constitués de végétaux tels que décrits précédemment, à savoir par élagage, entretien et déchets par les collectivités. Comme dit précédemment, le procédé de fabrication de pellets selon l'invention est également applicable aux résidus de biomasse humide constitués des déchets de bois seul. Le procédé selon l'invention permet de fabriquer des pellets par traitement de résidus de biomasse humide présentant un taux d'humidité compris entre 25 et 80%, de préférence d'environ 50%.

Lorsque la biomasse humide est constituée de broyat végétal en fermentation destiné au compost, le taux d'humidité est de 80%. Il est ainsi possible par l'application du procédé selon l'invention de fabriquer à partir de cette biomasse humide des pellets présentant une masse volumique ou compaction de 1000 Kg/m³. Plus le pellet est dense et plus son pouvoir calorifique est important. Par conséquent le pouvoir calorifique des pellets obtenus à partir de broyat végétal en fermentation destiné au compost est très élevé.

Lorsque la biomasse humide est constituée de litère de cheval présentant une compaction de 665 Kg/m³, le procédé selon l'invention permet de fabriquer des pellets dont la compaction est de 810 Kg/m³.

Ainsi, le procédé selon l'invention permet de fabriquer des pellets présentant une compaction supérieure à 750 Kg/m³ selon la nature de la biomasse humide entrante.

Lorsque les résidus de biomasse humide entrant dans la pastilleuse sont constitués de résidus de végétaux comprenant des ligneux et des herbacés, la matrice de la pastilleuse est percée de trous de diamètre de 6 mm.

Lorsque les résidus de biomasse humide entrant dans la pastilleuse sont constitués de résidus de bois, la matrice de la pastilleuse est percée de trous de diamètre de 10 ou 16 mm.

Le pellet présente de préférence un diamètre compris entre 6 et 16 mm et un taux d'humidité compris entre 5 et 15%, de préférence 10%.

Le pellet présente une valeur calorifique comprise entre 17,00 et 20,9 kJ/kg, une durabilité supérieure à 92%, un taux d'oxygène d'environ 38% et comprend moins de 2% de particules indésirables.

Par application du procédé selon l'invention, certains pellets à pouvoir calorifique très élevé présentent une compaction supérieure à 750 Kg/m³, de préférence une compaction comprise entre 810 et 1000 Kg/m³.

### Exemple 1: Procédé de fabrication de pellets de 6 mm de diamètre à partir de résidus de biomasse végétale.

1. On broie sommairement du déchet végétal frais constitué pour partie de matière ligneuse à hauteur d'environ 40/50%. Le taux d'humidité de la biomasse est de 55% et la compaction de 160-180 Kg/m³.
2. On nettoie ce broyat des éléments indésirables puis on le fait transiter dans un broyeur fin pour obtenir une granulométrie d'environ 10 mm.
3. On charge ce broyat fin dans la pastilleuse-deshydrateur par le moyen d'une vis sans fin actionnée par un minuteur permettant de quantifier le chargement de matière.

La pastilleuse est une pastilleuse simple de type Kahl® à laquelle on a adapté un écrou hydraulique. L'espace entre les roues du rotor et la matrice est inférieur à 1/10 mm.
La vitesse du rotor sur la matrice est d'environ 350 à 450 tours/minutes.
Le déshydrateur est un ensemble en métal caréné, composé de godets en acier de récupération de la biomasse extrudée à travers la matrice de la pastilleuse. Ces godets sont fixés sur une courroie synthétique entraînée par un moteur électrique, tel un convoyeur. Un orifice au sommet de l'ensemble permet l'évacuation de la vapeur d'eau. L'ouverture dans la partie basse permet à la biomasse, issue de la matrice, d'entrer dans le déshydrateur. Une autre ouverture dans la partie haute permet à la matière de revenir vers la cloche du cylindre. La force centrifuge permet au produit ainsi transporté d'être refoulé vers le cylindre.

La distance H du parcours des pellets dans le déshydratateur est d'environ 350 cm.
La matière chargée va immédiatement entrer en contact avec les parois du cylindre et le rotor qui sont portés à forte température, ce qui a pour effet d'assécher cette matière. La température est obtenue par frottement des métaux entre eux et felle est restituée à la matière par convection, puis par action mécanique (pastillage), puis par convection dans le deshydrateur.
4. On laisse recycler la matière une minute dans la pastilleuse-deshydrateur jusqu'à obtenir un pellet compact.
5. On vidange le pellet obtenu et on charge simultanément du broyat fin. Le by-pass occulte alors la partie chargement et les deux matériaux ne peuvent se mélanger.

### Exemple 2 : Pellet obtenu par le procédé selon l'invention.

Les pellets obtenus par le procédé selon l'exemple 1 présentent les caractéristiques suivantes :

| | |
|---|---|
| Diamètre : | 6mm |
| Humidité sur brut : | 12% |
| Résistance mécanique : | 99% |
| Pouvoir calorifique inférieur : | 18,96 kJ/kg |
| Masse volumique : | 665 Kg/m3 |
| Quantité de fines : | 0.1 % |
| Taux de cendres : | 5,7% |

### Exemple 3 : Procédé de fabrication de pellets de 6 mm de diamètre à partir de broyat végétal enfermentation destiné au compost.

La biomaase humide dans cet exemple présente un taux d'humidité de 80% et une masse volumique de 330 Kg/m³.
Après avoir effectué les étapes décrites dans l'exemple 1, on obtient des pellets de 6 mm de diamètre présentant une compaction de 1000 Kg/m³.

### Exemple 4 : Procédé de fabrication de pellets de 6 mm de diamètre à partir de litière de cheval.

Avec une biomasse humide présentant une compaction de 665 Kg/m³, le procédé selon l'invention tel que décrit à l'exemple 1 permet d'obtenir des pellets de 810 Kg/m³.

## Revendications

1. Procédé de fabrication de pellets à partir de résidus de biomasse humide ayant un taux d'humidité élevé compris entre 25 et 80 % comprenant les étapes de :
a) charger le broyat des résidus de biomasse humides dans un réceptacle,
b) sécher les résidus de biomasse humides et
c) transformer les résidus de biomasse secs dans une pastilleuse comportant une matrice en acier percée de trous et un rotor en acier comprenant des roues crantées en acier, pour obtenir les pellets dont le taux d'humidité est compris entre 5 et 15%,
**caractérisé en ce que** l'étape de séchage des résidus de biomasse humide s'effectue simultanément à l'étape de transformation en pellets à une température comprise entre 65 et 95°C obtenue par rotation des roues crantées en acier sur la matrice en acier dans une pastilleuse couplée en circuit fermé à un déshydrateur à échange air/air situé en aval de la pastilleuse et comprenant un by-pass de communication pastilleuse-déshydrateur.

2. Procédé selon la revendication 1 **caractérisé en ce que** l'étape de séchage simultanée avec l'étape de transformation des résidus en pellets dans la pastilleuse s'effectue avec une vitesse du rotor sur la matrice comprise entre 350 et 450 tours/minutes et un espace entre les roues du rotor et la matrice inférieur ou égal à 1/10 mm.

3. Procédé selon la revendication 1 et 2 **caractérisé en ce que** le déshydrateur à échange air/air est couplé à la pastilleuse de manière à refroidir de 8 à 15% la température des pellets entrant pour les réinjecter dans la pastilleuse par le by-pass de communication.

4. Procédé selon les revendications 1 et 2 **caractérisé en ce que** la matrice est percée de trous de diamètre compris entre 6 et 16 mm.

5. Procédé selon les revendications 1 et 2 **caractérisé en ce que** le rotor de la pastilleuse est fixé et maintenu par un écrou hydraulique.

6. Procédé selon les revendications 1 à 5 **caractérisé en ce que** la biomasse humide est constituée de résidus de végétaux et/ou de bois.

7. Procédé selon les revendications 1 et 4 **caractérisé en ce que** la biomasse humide entrant dans la pastilleuse est constituée de résidus de végétaux comprenant des ligneux et des herbacés et **en ce que** la matrice de la pastilleuse est percée de trous de diamètre de 6 mm.

8. Procédé selon la revendication 1 et 4 **caractérisé en ce que** la biomasse humide entrant dans la pastilleuse est constituée de résidus de bois et **en ce que** la matrice de la pastilleuse est percée de trous de diamètre de 10 ou 16 mm.

## Patentansprüche

1. Verfahren zur Herstellung von Pellets aus feuchten Biomasseresten mit einem hohen Feuchtigkeitsgrad, der zwischen 25 und 80 % liegt, wobei das Verfahren die folgenden Schritte umfasst:
a) Füllen der Maische von feuchten Biomasseresten in ein Sammelbecken,
b) Trocknen der feuchten Biomassereste und
c) Umwandeln der trockenen Biomassereste in einer Pelletiereinrichtung, die eine Stahlmatrix, die mit Löchern durchbohrt ist, und einen Stahlrotor, der Stahlzahnräder umfasst, um Pellets zu erzielen, deren Feuchtigkeitsgrad zwischen 5 und 15 % liegt,
**dadurch gekennzeichnet, dass** der Schritt der Trocknung der feuchten Biomassereste zeitgleich mit dem Schritt der Umwandlung in Pellets bei einer Temperatur, die zwischen 65 und 95 °C liegt, durchgeführt wird, die durch Drehen der Stahlzahnräder auf der Stahlmatrix in einer Pelletiereinrichtung erzielt wird, die in einem geschlossenen Kreislauf mit einem Luft-Luft-Austausch-Wasserabscheider gekoppelt ist, der sich stromabwärts der Pelletiereinrichtung befindet und eine Umgehungsleitung zur Verbindung von Pelletiereinrichtung und Wasserabscheider umfasst.

2. Verfahren nach Anspruch 1, **dadurch gekennzeichnet, dass** der mit dem Schritt der Umwandlung der Reste in Pellets in der Pelletiereinrichtung zeitgleiche Schritt der Trocknung mit einer Geschwindigkeit des Rotors auf der Matrix, die zwischen 350 und 450 Umdrehungen/Minute liegt, und einem Zwischenraum zwischen den Rädern des Rotors und der Matrix, der kleiner gleich 1/10 mm ist, durchgeführt wird.

3. Verfahren nach Anspruch 1 und Anspruch 2, **dadurch gekennzeichnet, dass** der Luft-Luft-Austausch-Wasserabscheider derart mit der Pelletiereinrichtung gekoppelt ist, dass die Temperatur der eintretenden Pellets um 8 bis 15 % abgekühlt wird, um diese durch die Verbindungsumgehungsleitung erneut in die Pelletiereinrichtung zu injizieren.

4. Verfahren nach den Ansprüchen 1 und 2, **dadurch gekennzeichnet, dass** die Matrix mit Löchern mit einem Durchmesser, der zwischen 6 und 16 mm liegt, durchbohrt ist.

5. Verfahren nach den Ansprüchen 1 und 2, **dadurch gekennzeichnet, dass** der Rotor der Pelletiereinrichtung durch eine Hydraulikmutter befestigt und gehalten wird.

6. Verfahren nach den Ansprüchen 1 bis 5, **dadurch gekennzeichnet, dass** die feuchte Biomasse aus Pflanzen- und/oder Holzresten besteht.

7. Verfahren nach den Ansprüchen 1 und 4, **dadurch gekennzeichnet, dass** die in die Pelletiereinrichtung eintretende feuchte Biomasse aus Pflanzenresten besteht, die holzartige und krautartige Pflanzen umfassen, und dass die Matrix der Pelletiereinrichtung mit Löchern mit einem Durchmesser von 6 mm durchbohrt ist.

8. Verfahren nach Anspruch 1 und Anspruch 4, **dadurch gekennzeichnet, dass** die in die Pelletiereinrichtung eintretende feuchte Biomasse aus Holzresten besteht und dass die Matrix der Pelletiereinrichtung mit Löchern mit einem Durchmesser von 10 oder 16 mm durchbohrt ist.

## Claims

1. Method for manufacturing pellets from residues of wet biomass having a high moisture ratio comprised between 25 and 80% comprising the following steps:
a) loading the homogenate of the residues of wet biomass in a receptacle,
b) drying the residues of wet biomass in a dehydrator, and
c) transforming the dry biomass residues in a pelletizer comprising a steel matrix pierced with holes and a steel rotor comprising steel notched wheels for obtaining pellets whose moisture ratio is comprised between 5 and 15%,
**characterized in that** the step of drying the residues of wet biomass is carried out simultaneously with the step of transformation into pellets at a temperature comprised between 65 and 95°C obtained by rotation of the notched steel wheels on the steel matrix in a pelletizer coupled, in closed circuit, to an air/air exchange dehydrator comprising a pelletizer-dehydrator communication by-pass.

2. Method according to claim 1, **characterized in that** the step of drying, simultaneous with the step of transforming residues into pellets in the pelletizer, is carried out with a rotor speed on the matrix comprised between 350 and 450 revolutions/minutes and a space between the rotor wheels and the matrix less than or equal to 1/10 mm.

3. Method according to claim 1 and 2 , **characterized in that** air/air exchange dehydrator is coupled to the pelletizer so as to lower by 8 to 15% the temperature of the incoming pellets so as to re-inject them in the pelletizer by the communication by-pass.

4. Method according to claims 1 and 2, **characterized in that** the matrix is pierced with holes having a diameter comprised between 6 and 16 mm.

5. Method according to claims 1 and 2, **characterized in that** the rotor of the pelletizer is fixed and maintained by a hydraulic nut.

6. Method according to claims 1 to 5, **characterized in that** the wet biomass is constituted of residues of plants and/or wood.

7. Method according to claims 1 and 4, **characterized in that** the wet biomass entering the pelletizer is constituted of plant residues comprising ligneous and herbaceous plants, and **in that** the matrix of the pelletizer is pierced with holes having a 6 mm diameter.

8. Method according to claim 1 and 4, **characterized in that** the wet biomass entering the pelletizer is constituted of wood residues, and **in that** the matrix of the pelletizer is pierced with hole having a 10 or 16 mm diameter.
